# EUROPEAN PATENT APPLICATION

(11) **EP 4 603 545 A1**
(43) Date of publication of application: **20.08.2025**
(21) Application number: 23877286.7
(22) Date of filing: 10.10.2023
(51) Int. Cl.: C08L 101/00, C08K 3/013, C08K 3/36, C08K 7/24

(54) **RESIN FILM AND COVER MATERIAL FOR AGRICULTURAL USE USING SAME**

(30) Priority: 11.10.2022 JP 2022163305
(71) Applicant: Fuso Chemical Co., Ltd., Osaka-shi, Osaka 541-0041 (JP)
(72) Inventor: OKURA, Hiroshi, Osaka-shi, Osaka 541-0041 (JP); KITANO, Akira, Osaka-shi, Osaka 541-0041 (JP); KOMOTO, Munenori, Osaka-shi, Osaka 541-0041 (JP); OMOKAWA, Kazui, Osaka-shi, Osaka 541-0041 (JP); TANAKA, Shunsuke, Osaka-shi, Osaka 541-0041 (JP); FUJIOKA, Atsushi, Osaka-shi, Osaka 541-0041 (JP)
(74) Representative: Müller-Boré & Partner Patentanwälte PartG mbB
(86) International application number: PCT/JP2023/036796
(87) International publication number: WO 2024/080283

(57) **Abstract**

The present invention provides a resin film which has high light transmittance and/or high rate of light utilization for use for plants in comparison to conventional resin films, and which is capable of accelerating the growth of agricultural crops. This resin film is characterized by containing ceramic fine particles (A), and is also characterized in that: ceramic nanoparticles (B) and/or ceramic microparticles (C) as the ceramic fine particles (A), the ceramic nanoparticles (B) have a particle size of 1 nm to 100 nm, and the ceramic microparticles (C) have a particle size of 1 nm to 100 nm. The total content of the ceramic nanoparticles (B) and the ceramic microparticles (C) is between 95 mass% and 100 mass% in the total mass of the ceramic fine particles (A).

## Description

### TECHNICAL FIELD

The present invention pertains to the field of technology for resin films. Specifically, it relates to a resin film to be suitably used as an agricultural covering material.

### BACKGROUND ART

In recent years, as agricultural covering materials to promote crop growth, a polyvinyl chloride film (hereinafter, referred to as "agricultural vinyl"), a polyethylene film (hereinafter, referred to as "agricultural polyethylene"), ethylene-vinyl acetate copolymer film (hereinafter, referred to as "agricultural vinyl acetate"), a polyolefin resin film (hereinafter, referred to as "agricultural PO"), a fluororesin film (hereinafter, "PTFE film"), and also a biodegradable polymer film (BDP film), for example, are suitably used. The cultivation of useful plants with these agricultural covering materials, for example, greenhouse cultivation, tunnel cultivation, and mulch cultivation, are widely practiced (Patent Literature 1 and Patent Literature 2).

### CITATION LIST

### PATENT LITERATURE

Patent Literature 1: Japanese Patent Publication 2021-193977
Patent Literature 2: Japanese Patent Publication 2011-92058

### SUMMARY OF INVENTION

### Technical Problem

However, resin films (agricultural covering materials) such as "agricultural vinyl", "agricultural polyethylene", "agricultural vinyl acetate", "agricultural PO", "PTFE film", and "BDP film" generally have greatly reduced light transmittance and allow straight traveling light with less haze to pass therethrough. Thus, a problem of not sufficiently promoting growth of crops has been pointed out. In other words, conventional resin films do not provide optimal light transmittance and/or scattered light for growth of crops, and further improvement and enhancement are strongly required.

The present invention was made to solve the technical problems faced by the conventional resin films as described above, which specifically are technical problems that the light transmittance and light utilization rate are low and still insufficient, for example, from the viewpoint of growing crops.

In other words, it is an object of the present invention to provide a resin film that has a higher light transmittance than those of conventional resin films, increases the utilization rate of light used for plants, and can promote the growth of crops.

### Solution to Problem

The inventors of the present invention have made a series of diligent studies to solve the above-described problems of the conventional technology. Consequently, it was found that the following points are important:
(1) The addition of ceramic fine particles to a resin film increases the light transmittance of the resin film and/or increases the utilization rate of light used for plants, which can promote the growth of crops when the resin film is used as an agricultural covering material;
(2) Simply adding ceramic fine particles to the resin film is not enough to achieve this effect, and it is necessary to precisely control the particle size of the ceramic fine particles to be added; and
(3) More specifically, the ceramic fine particles to be added do not include ceramic fine particles having a particle size larger than 100 nm and smaller than 3 µm.

It was found that the above-described problems of the conventional technology can be solved by the following ideas (a) through (c), and a resin film of the present invention has been completed.
(a) The resin film contains ceramic fine particles other than ceramic fine particles having a particle size larger than 100 nm and smaller than 3 µm.
(b) The resin film contains ceramic fine particles (ceramic nanoparticles) having a particle size of 100 nm or smaller that do not substantially cause Rayleigh scattering.
(c) The resin film contains ceramic fine particles (ceramic microparticles) having a particle size of 3 µm or larger that cause Mie scattering of incident light but scatter most (99% or more) of the incident light forward.

That is, the above-described problems are solved by the present invention described below.

### [1] The resin film (X)

The resin film (X) of the present invention contains ceramic fine particles (A), wherein:
the resin film contains ceramic nanoparticles (B) and/or ceramic microparticles (C) as the ceramic fine particles (A); the ceramic nanoparticles (B) have a particle size of 1 nm to 100 nm, and the ceramic microparticles (C) have a particle size of 3 µm to 20 µm, and
the total content of the ceramic nanoparticles (B) and the ceramic microparticles (C) is between 95 mass% and 100 mass% in the total mass of the ceramic fine particles (A).

The resin film (X) of the present invention preferably satisfies the following:
the ceramic nanoparticles (B) and the ceramic microparticles (C) are silica fine particles;
the resin film contains hollow particles as the ceramic fine particles (A); and
the content of the ceramic fine particles (A) is between 0.1 mass% and 50 mass%.

### [2] An agricaltural covering material

The agricaltural covering material (Y) of the present invention is the agricaltural covering material (Y) using the resin film (X) of the present invention.

### Advantageous Effect of Invention

The resin film of the present invention provides a resin film that has a higher light transmittance than those of conventional resin films, increases the utilization rate of light used for plants, and can promote the growth of crops.

### DESCRIPTION OF EMBODIMENTS

An embodiment of the present invention will now be described more specifically.

A resin film of the present invention contains ceramic fine particles (A), in which
the resin film contains ceramic nanoparticles (B) and/or ceramic microparticles (C), the ceramic nanoparticles (B) have a particle size of 1 nm to 100 nm, and the ceramic microparticles (C) have a particle size of 3 µm to 20 µm, and
the total content of the ceramic nanoparticles (B) and the ceramic microparticles (C) is between 95 mass% and 100 mass% in the total mass of the ceramic fine particles (A).

Herein, the term "resin film" refers to a thin-film body that is formed of resin as a main component. The "resin film" only needs to contain resin as a main component, and may contain other components for the purpose of manufacturing a film or the purpose of improving the function of the film.

### [1] Resin film (X)

A resin film (X) of the present invention contains the ceramic fine particles (A) and contains the ceramic nanoparticles (B) and/or the ceramic microparticles (C) as the ceramic fine particles (A). In other words, the resin film (X) of the present invention is formed of at least a resin (matrix), contains the ceramic fine particles (A), and contains the ceramic nanoparticles (B) and/or the ceramic microparticles (C) as the ceramic fine particles (A).

### [1-1] Ceramic fine particles (A)

The resin film (X) of the present invention contains the ceramic fine particles (A). Containing the ceramic fine particles having a predetermined particle size in the resin film can reduce the refractive index of the resin film and increase the light transmittance of the resin film and/or the utilization rate of light used for plants.

The term "ceramic (synonymous with ceramics)" refers to inorganic solid materials and excludes substances made solely of atoms of metallic elements (metals, alloys, etc.).

Examples of the ceramic include compounds composed of a combination of atoms made mainly of nonmetallic elements and atoms made of metallic elements, such as metal oxides (silica, alumina, titania, zirconia, mullite, cordierite, etc.); metal carbides (silicon carbide, etc.); metal nitrides (silicon nitride, aluminum nitride, etc.); metal fluorides (magnesium fluoride and calcium fluoride), as well as naturally occurring inorganic materials (glass, cement, ceramics, etc.).

However, if the refractive index of the ceramic fine particles is not lower than that of a common resin film (refractive index: about 1.6), the effect of reducing the refractive index of the resin film cannot be achieved. For example, the refractive index of titania, the material of which has a refractive index of about 2.5 to 2.7, is higher than that of a common resin film (about 1.60), and thus the refractive index cannot be reduced even if the titania is contained in the resin film without being processed. Thus, the refractive index of the ceramic fine particles is preferably 1.55 or lower, and more preferably 1.45 or lower. Examples of a method of lowering the refractive index of the ceramic fine particles include making the ceramic fine particles into hollow particles described later. From this viewpoint, as the type of ceramic to be used, silica is preferable because the material itself has a low refractive index of about 1.4.

Herein, the term "fine particles" refers to particles having particle sizes of a nanometer level and a micrometer level. These "fine particles" may be primary particles or may be secondary particles formed by agglomeration of the primary particles. The "particle size" is determined, for example, by observing 200 or more particles with a scanning electron microscope (SEM) and obtaining the equivalent circle diameters through image analysis of the particles, and the "average particle size" is based on the 50% diameter (D50v) in the cumulative frequency of the equivalent circle diameters obtained through the image analysis of the particles. In this case, for agglomerates in which primary particles are agglomerated to form secondary particles, it means the particle size of the secondary particles. Behavior of real particles is considered therein.

### [1-2] Ceramic nanoparticles (B)

The resin film (X) of the present invention contains either one or both of the ceramic nanoparticles (B) and the ceramic microparticles (C) as the ceramic fine particles (A).

The ceramic nanoparticles (B) cause substantially no Rayleigh scattering. Thus, the decrease in light transmittance of the resin film due to scattering of light incident on the resin film can be suppressed by containing the ceramic nanoparticles (B) in the resin film.

The "ceramic nanoparticles (B)" are particles having a particle size of a nanometer level, and specifically are particles having a particle size of 1 nm to 100 nm. Among these, particles having a particle size of 1 nm to 80 nm are preferable as the ceramic nanoparticles (B), and particles having a particle size of 1 nm to 50 nm are more preferable.

By setting the particle size of the ceramic nanoparticles (B) to 1 nm or larger, agglomeration of the ceramic nanoparticles (B) can be suppressed and they can be uniformly dispersed in the resin matrix. By setting the particle size of the ceramic nanoparticles (B) to 100 nm or smaller, Rayleigh scattering is substantially prevented from occurring, and the decrease in light transmittance of the resin film due to Rayleigh scattering of light incident on the resin film can be suppressed.

### [1-3] Ceramic microparticles (C)

The ceramic microparticles (C) cause Mie scattering of incident light, but scatter most of the incident light forward (do not scatter the most backward). Thus, the decrease in light transmittance of the resin film due to backscattering of light incident on the resin film can be suppressed by containing the ceramic microparticle (C) in the resin film, and light diffused forward can be increased by the forward scattering, so that more light can travel forward through the resin film.

The "ceramic microparticles (C)" are particles having a particle size of a micrometer level, and are specifically particles having a particle size of 3 µm to 20 µm. Among these, particles having a particle size of 4 µm to 15 µm are preferable as the ceramic microparticles (C), and particles having a particle size of 4 µm to 10 µm are more preferable.

By setting the particle size of the ceramic microparticles (C) to 3 µm or larger, Mie scattering of incident light is caused, but most of the incident light is scattered forward (the most is not scattered backward), thus the decrease in light transmittance of the resin film due to Mie scattering of incident light on the resin film can be suppressed.

By setting the particle size of the ceramic microparticles (C) to 20 µm or smaller, effects of suppressing the formation of easily reflective crystal surfaces on the surface of the micro-particles and reducing the reflectance of incident light can be obtained.

The ceramic microparticles (C) can increase scattered light without significantly reducing light transmittance. Thus, by containing the ceramic microparticles (C), the resin film (X) of the present invention can provide plants with more light, e.g., light in a lower part of a greenhouse, even when the altitude of the sun is lower.

The resin film (X) of the present invention may be in three forms: (1) a form containing the ceramic nanoparticles (B) and not containing the ceramic microparticles (C); (2) a form containing the ceramic microparticles (C) and not containing the ceramic nanoparticles (B); and (3) a form containing both the ceramic nanoparticles (B) and the ceramic microparticles (C).

Among these three forms of the resin film (X) of the present invention, (1) the form containing the ceramic nanoparticles (B) and not containing the ceramic microparticles (C), or (3) the form containing both the ceramic nanoparticles (B) and the ceramic microparticles (C) is preferable. These forms contain the ceramic nanoparticles (B). The ceramic nanoparticles (B) have an advantage that they do not scatter and can reduce the refractive index of the resin film, and consequently can increase the light transmittance of the resin film.

Furthermore, the resin film (X) of the present invention is also preferable to be in a form using hollow particles as the ceramic fine particles (A). Hollow particles have a low refractive index because their hollow parts contain air (the refractive index of which is about 1). In other words, the refractive index is reduced by the effect of the hollow parts of the hollow particles. The form using hollow particles in the resin film (X) of the present invention has an effect of reducing the refractive index of the ceramic fine particles (A) and increasing the light transmittance of the resin film (X). This form is preferable from the viewpoint of being able to form ceramic fine particles having a low refractive index even when ceramic having a high refractive index is used. Thus, the resin film (X) of the present invention preferably contains the hollow ceramic nanoparticles (B) and/or the hollow ceramic microparticles (C) as the ceramic fine particles (A) from the viewpoint of enhancing the effect of increasing the light transmittance of the resin film (X).

### [1-4] Resin (matrix)

The resin to be used as the matrix of the resin film (X) of the present invention is not limited to a particular one. Common plastics that are available such as for agricultural covering materials can be used.

Examples of the resins (matrix) that can be preferably used include polysaccharides, polysaccharide ester derivatives, polyethylene, polypropylene, polystyrene, polymethylpentene, polybutene, butadiene styrene, polyvinyl chloride, polymethacryl styrene, polysulfone, styrene-acrylonitrile resin, acrylonitrile-butadiene resin, acrylonitrile-butadiene-acrylic acid ester resin, acrylonitrile-butadiene-styrene resin, urea-formaldehyde resin, polyethylene terephthalate, polytrimethylene terephthalate, polymethyl methacrylate, polyphenylene ether, polyphenylene sulfide, polyphenylene sulfide, polyacrylonitrile, polychlorotrifluoroethylene, polyvinyl alcohol, polyvinylidene chloride, polyvinylidene fluoride, polycarbonate, polyamide, polyamideimide, polyoxymethylene, polyacetal, polyformaldehyde, polybutylene terephthalate, polytetrafluoroethylene, ethyl vinyl acetate copolymer, ethylene tetrafluoroethylene copolymer, melamine resin, polyurea, polyurethane, epoxy resin, unsaturated polyester, polyarylsulfone, polyacrylate, hydroxybenzoic acid polyester, polyetherimide, polycyclohexylenedimethylene terephthalate, polyethylene naphthalate, polyester carbonate, aromatic polyester, aliphatic polyester, polylactic acid, lactic acid polyester, cellulose ester, polyhydroxybutyrate, polybutylene terephthalate, polybutylene adipate terephthalate, polybutylene succinate, polybutylene succinate adipate, hydroxybutyrate 3-hydroxyhexanoic acid copolyester, polyglycolic acid, polyethylene terephthalate, polyethylene terephthalate succinate, polytetramethylene adipate rephthalate, polyhydroxybutyrate, cellulose acetate, cellulose nitrate, cellulose propionate, ethyl cellulose, bacterial cellulose, furan-formaldehyde resin, melamine-formaldehyde resin, polyimide, chitosan, cellulose, starch, polycaprolactone, starch-based copolyester, esterified starch, polyhydroxyalkanoate, polybutylene succinate adipate, polybutylene adipate terephthalate, phenol resin, silicone, polyether, and long-chain dicarboxylic acid copolymers. Any combination of these can also be preferably used.

Examples of the resin (matrix) also include ultraviolet and other light-curing polymers. As the ultraviolet and other light-curing polymers, acrylic compounds, epoxy compounds, urethane compounds, and silicone compounds, for example, can be preferably used. Examples of the acrylic compounds include: non-substituted alkyl-(meth)acrylates, such as methyl-acrylate, methyl-methacrylate, ethyl-acrylate, ethyl-methacrylate, butyl-acrylate, butyl-methacrylate, 2-ethylhexyl-acrylate, and 2-ethylhexyl methacrylate; substituted alkyl-(meth)acrylate, such as a hydroxyl group, an epoxy group, or halogen-substituted alkyl-(meth)acrylate; and cyclopentenyl-(meth)acrylate, tetrahydrofurfuryl-(meth)acrylate, benzyl-(meth)acrylate, and polyethylene glycol di-(meth)acrylate.

The weight average molecular weight of the resin is also not limited to a particular one. However, it is preferably between 5,000 and 400,000, and is more preferably between 10,000 and 250,000. From the viewpoint of coating performance, strength and handling of a formed sheet, resins in the above-described range of the weight average molecular weight can be suitably used.

### [1-5] Structure of resin film

Any "film" is included in the "resin film" of the present invention if it is a thin-film body regardless of its name. For example, what is generally called a "film" (having a thickness of 250 µm or smaller) may be a "sheet" (having a thickness of 250 µm or greater) or a "foil (leaf)" as a matter of course. In other words, there is no limit to the thickness of the resin film.

When the resin film of the present invention is used as a resin agricultural covering material, it can be used without problems as long as it has the pliability or flexibility necessary to cover crops and enough strength against rupture when being handled. For example, when "agricultural vinyl", "agricultural polyethylene", "agricultural vinyl acetate", "agricultural PO", "PTFE film", "BDP film", and the like are used for vinyl greenhouses or tunnels, the thicknesses thereof are suitably about 50 µm to 200 µm. When they are used as agricultural mulch films, the thicknesses thereof are suitably about 10 µm to 75 µm. When hard acrylic, polycarbonate, or acrylonitrile resins, for example, are used for agricultural greenhouses, relatively thick ones are preferred, and films having thicknesses of about 100 µm to 1000 µm can be suitably used.

The "film" is not limited to a single-layer film, and may be a multi-layer film. In the multi-layer film, the composition (type and composition of contained components) and the thickness, for example, of each layer may be changed as needed.

### [1-6] Composition of resin film

In the resin film (X) of the present invention, the total content of the ceramic nanoparticles (B) and the ceramic microparticles (C) in the total mass of the ceramic fine particles (A) is between 95 mass% and 100 mass%, preferably between 98 mass% and 100 mass%, and more preferably 100 mass%. By setting the total content of the ceramic nanoparticles (B) and the ceramic microparticles (C) within the above-described range, the light transmittance of the resin film and/or the utilization rate of light used for plants can be increased, and the growth of crops can be promoted when the resin film is used as an agricultural covering material.

In the resin film (X) of the present invention, the content of ceramic particles larger than 100 nm and smaller than 3 µm in the total mass of the ceramic fine particles (A) is limited to 5 mass% or less, preferably limited to 2 mass% or less, and more preferably 0 mass%. By setting the content of ceramic particles larger than 100 nm and smaller than 3 µm within the above-described range, backscattering is increased, whereby the light transmittance of the resin film and/or the utilization rate of light used for plants is increased, and the growth of crops can be promoted when the resin film is used as an agricultural covering material.

In the resin film (X) of the present invention, ceramic particles smaller than 1 nm and/or larger than 20 µm are allowed to be contained to the extent that the content thereof in the total mass of the ceramic fine particles (A) is 5 mass% or less and the effects of the present invention and the other performance of the resin film are not impaired.

It is preferable for the resin film (X) of the present invention that the ceramic fine particles (A) are silica fine particles: for example, when the ceramic nanoparticles (B) are contained, the ceramic nanoparticles (B) are silica fine particles; when the ceramic microparticles (C) are contained, the ceramic microparticles (C) are silica fine particles; and when the ceramic nanoparticles (B) and the ceramic microparticles (C) are contained, both the ceramic nanoparticles (B) and the ceramic microparticles (C) are silica fine particles, from the viewpoint of making the refractive index of the resin film lower than the refractive index of common resin films and enhancing the effect of increasing the light transmittance of the resin film and/or the utilization rate of light used for plants.

The resin film (X) of the present invention contains both the ceramic nanoparticles (B) and the ceramic microparticles (C), which can also increase scattered light while increasing the light transmittance. In this case, the resin film (X) of the present invention contains both the ceramic nanoparticles (B) and the ceramic microparticles (C), and the mass ratio ((C)/(B)) of the ceramic microparticles (C) to the ceramic nanoparticles (B) is preferably 100 or less, more preferably 10 or less, and still more preferably 1 or less.

The resin film (X) of the present invention contains the ceramic fine particles (A) preferably at a content of 0.1 mass% to 50 mass%, and more preferably at a content of 0.5 mass% to 20 mass%. By setting the content of the ceramic fine particles (A) to 0.1 mass% or more, the effect of increasing the light transmittance of the resin film and/or the utilization rate of light used for plants can be more easily obtained. By setting the content of the ceramic fine particles (A) to 50 mass% or less, the ceramic fine particles can be easily dispersed uniformly in the resin.

The resin film (X) of the present invention is formed of at least a resin (matrix) and contains the ceramic fine particles (A). However, if needed, within a range not impairing the effect of the present invention, the resin film (X) may contain, for example, material having a low refractive index (e.g., hollow nanopolymer) other than ceramic, material having a transmittance that is increased only for a specific wavelength range by coloring with various organic dyes, and ceramic that transmits a wavelength not used for fluorescence emission and uses an absorbed wavelength as converted light.

The resin film (X) of the present invention may contain a dispersant. When the resin film (X) of the present invention is produced, containing the dispersant can be suitably used in a process of dispersing the ceramic fine particles (A) in the resin. When the resin film contains the dispersant on the surface of the fine particles or within the polymer, the agglomeration of the ceramic fine particles (A) can be suppressed.

As the dispersant, organic acid, a polymer compound, a surfactant, and a lubricant, for example, can be used. In particular, examples of the surfactant include: surfactants based on polyhydric alcohol partial esters composed of polyhydric alcohols and higher fatty acids, including various known nonionic surfactants (polyethylene glycol-type nonionic surfactants, etc.), anionic surfactants (carboxylates, sulfonates, carboxylates/sulfonates, sulfate ester salts, phosphate ester salts, etc.), cationic surfactants (amine salt-type cationic surfactants, quaternary ammonium salt-type cationic surfactants, etc.), and the like; silicone surfactants; fluorinated surfactants; amino acid-type amphoteric surfactants; and betaine-type amphoteric surfactants. Examples of the lubricant for dispersing fine particles include polyethylene wax, fluid paraffin, bisamide, stearic acid, zinc stearate, aliphatic alcohols, calcium stearate, barium stearate, barium ricinoleate, dibutyltin dilaurate, dibutyltin dimalate, organophosphate metal salts, organophosphite compounds, phenols, and β-diketone compounds. These lubricants are mixed with the polymer after being in direct contact with the fine particles, and thus are preferable from the viewpoint of dispersion. Treatment with an acid or alkaline solution can also be suitably used as a method of separating bonds between fine particles and adjusting their sizes.

Examples of the surfactant to be used as the dispersant include:
sodium laurate, sodium myristate, sodium palmitate, sodium stearate, perfluorooctanoic acid, perfluorononanoic acid, sodium N-lauroyl sarcosine, sodium cocoyl glutamate, alpha-sulfo fatty acid methyl ester salts, sodium octanoate, sodium decanoate, sodium 1-hexanesulfonate, sodium 1-octanesulfonate, sodium 1-decanesulfonate, sodium 1-dodecanesulfonate, perfluorobutanesulfonate, sodium linear alkylbenzenesulfonate, sodium toluene sulfonate, sodium cumene sulfonate, sodium octylbenzenesulfonate, sodium dodecylbenzenesulfonate, sodium naphthalene sulfonate, disodium naphthalene disulfonate, trisodium naphthalene trisulfonate, sodium butyl naphthalene sulfonate, perfluorooctane sulfonate, sodium di(2-ethylhexyl)sulfosuccinate, sodium lauryl sulfate, sodium myristyl sulfate, sodium laureth sulfate, sodium polyoxyethylene alkyl phenol sulfonate, ammonium lauryl sulfate, lauryl phosphate, sodium lauryl phosphate, potassium lauryl phosphate, tetramethyl ammonium chloride, tetramethyl ammonium hydroxide, tetrabutylammonium chloride, dodecyldimethylbenzylammonium chloride, alkyltrimethylammonium chloride, octyltrimethylammonium chloride, decyltrimethylammonium chloride, dodecyltrimethylammonium chloride, tetradecyltrimethylammonium chloride, cetyltrimethylammonium chloride, stearyltrimethylammonium chloride, alkyltrimethylammonium bromide, hexadecyltrimethylammonium bromide, benzyltrimethylammonium chloride, benzyltriethylammonium chloride, benzalkonium chloride, benzalkonium bromide, benzethonium chloride, dialkyl dimethyl ammonium chloride, didecyldimethyl ammonium chloride, distearyldimethyl ammonium chloride, monomethylamine hydrochloride, dimethylamine hydrochloride, trimethylamine hydrochloride, butylpyridinium chloride, dodecylpyridinium chloride, cetylpyridinium chloride, glycerin laurate, glycerin monostearate, sorbitan fatty acid ester, sucrose fatty acid ester, polyoxyethylene alkyl ether, pentaethylene glycol mono dodecyl ether, octaethylene glycol mono dodecyl ether, polyoxyethylene alkyl phenyl ether, octylphenol ethoxylate, nonylphenol ethoxylate, polyoxyethylene polyoxypropylene glycol, polyoxyethylene glycerol fatty acid ester, polyoxyethylene castor oil, polyoxyethylene hardened castor oil, polyoxyethylene sorbitan fatty acid ester, polyoxyethylene sorbitol fatty acid ester, polyoxyethylene hexitan fatty acid ester, sorbitan fatty acid ester polyethylene glycol, lauric acid diethanolamide, oleic acid diethanolamide, stearic acid diethanolamide, coconut oil fatty acid diethanolamide, octyl glucoside, decyl glucoside, lauryl glucoside, cetanol, stearyl alcohol, oleyl alcohol, betaine lauryl dimethylaminoacetate, betaine stearyl dimethylaminoacetate, dodecyl aminomethyl dimethyl sulfopropyl betaine, octadecyl aminomethyl dimethyl sulfopropyl betaine, cocamidopropyl betaine, cocamidopropyl hydroxy sultaine, 2-alkyl-N-carboxymethyl-N-hydroxyethyl imidazolinium betaine, sodium lauroyl glutamate, potassium lauroyl glutamate, lauroyl methyl-β-alanine, lauryl dimethylamine N-oxide, oleyl dimethylamine N-oxide, dodecylamine, hexadecylamine, oleylamine, oleic acid, sodium dodecyl sulfate, behenylamine, coconut amine, lauryl amine, stearyl amine, soyamine, lauryl dimethylamine, soy dimethylamine, stearyl dimethylamine, palmityl dimethylamine, distearyl methylamine, tribenzylamine, trioctylamine, trioctylphosphine, polyoxyethylene oleylamine, dodecanethiol, and 1-aminodecane. The surfactant is not limited to a particular substance as long as it has the effect of dispersing the ceramic fine particles (A) in the resin.

### [2] Agricultural covering material

An agricultural covering material of the present invention is a material for which the above-described resin film of the present invention is used. The agricultural covering material (resin film) of the present invention can also be formed with an inexpensive and readily available material such as a general-purpose resin, general-purpose ceramic, or the like, which is highly likely to reduce the unit cost of a product. Thus, the agricultural covering material of the present invention has an advantage that farmers can purchase, at a low cost, the resin film having a higher light transmittance more than those of conventional resin films and being capable of promoting the growth of crops.

### [Examples]

The following more specifically describes the present invention with reference to Examples. However, the present invention is not limited only to the forms of Examples below.

### [Comparative Examples 1 and 2, Examples 1 to 5].

Resin films having a thickness of 150 µm or 100 µm were produced, and the physical properties of the resin films and the growths of plants covered with the resin films were compared.

### [1] Production of resin films

### (Comparative Examples 1 and 2)

For the resin films in Comparative Examples 1 and 2, low-density polyethylene was used as the resin, and resin films containing no ceramic fine particles were produced. "Petrosen" (trade name, manufactured by Tosoh Corporation) was used as the low-density polyethylene.

### (Example 1)

For the resin film of Example 1, the same low-density polyethylene as in Comparative Example 1 was used as the resin, and a resin film containing ceramic nanoparticles (B) at 10 mass% was produced. As the ceramic nanoparticles (B), silica particles having an average particle size of 60 nm and a particle size range of 40 to 80 nm were used. The same low-density polyethylene as in Comparative Example 1 was used, and "HSP-6A" (trade name, average particle size: 60 nm, particle size range: 40 to 80 nm, manufactured by Fuso Chemical Co., Ltd.) was used as the silica particles.

### (Example 2)

For the resin film in Example 2, the same low-density polyethylene as in Example 1 was used as the resin, and a resin film containing hollow ceramic nanoparticles (B) at 10 mass% was produced. As the hollow ceramic nanoparticles (B), hollow silica particles having an average particle size of 60 nm and a particle size range of 40 to 80 nm were used. The same low-density polyethylene as in Comparative Example 1 was used.

The hollow silica particles were produced as follows. A chemical reactor equipped with a 1-L four-necked flask, a stirrer impeller, and a water bath was prepared. A solution in which polystyrene particles having an average particle size of 20 nm and a particle size range of 10 to 30 nm were dispersed was put into the flask, methanol was added as a solvent, and a 25% ammonia aqueous solution was added to prepare a reaction solution 1.

Meanwhile, tetramethoxysilane (TMOS) and methanol were mixed to prepare a reaction solution 2. To the reaction solution 1 kept at 30°C, the reaction solution 2 was added three times at 30-minute intervals. This mixed solution was stirred at 250 rpm for 1 hour to form core-shell particles in which each polystyrene particle serving as a core in the mixed solution was coated by a shell made of silica. The mixed solution was dried on a hot plate at 150°C to obtain a powder of the core-shell particles.

The powder of the core-shell particles was then heat-treated at 500°C to remove the polystyrene as the core, whereby silica-based hollow particles having an average particle size of 60 nm and a particle size range of 40 to 80 nm were produced.

### (Example 3)

For the resin film in Example 3, the same low-density polyethylene as in Example 1 was used as the resin, and a resin film containing ceramic microparticles (C) at 2 mass% was produced. As the ceramic microparticles (C), silica particles having an average particle size of 4 µm and a particle size range of 3 to 5 µm were used. The same low-density polyethylene as in Comparative Example 1 was used, and "SiO₂ silicon dioxide" (trade name, average particle size: 4 µm, particle size range: 3 to 5 µm, manufactured by Kojundo Chemical Laboratory Co., Ltd.) was used as the silica particles.

### (Example 4)

For the resin film in Example 4, the same low-density polyethylene as in Example 1 was used as the resin, and a resin film containing ceramic nanoparticles (B) at 4 mass% and ceramic microparticles (C) at 1 mass% (ceramic fine particles at 5 mass% in total) was produced. As the ceramic nanoparticles (B), silica particles having an average particle size of 60 nm and a particle size range of 40 to 80 nm were used. As the ceramic microparticles (C), silica particles having an average particle size of 4 µm and a particle size range of 3 to 5 µm were used. The same low-density polyethylene as in Comparative Example 1 was used, the same silica particles having an average particle size of 60 nm and a particle size range of 40 to 80 nm as in Example 1 was used, and the same silica particles having an average particle size of 4 µm and a particle size range of 3 to 5 µm as in Example 3 was used.

### (Example 5)

For the resin film in Example 5, the same low-density polyethylene as in Example 1 was used as the resin, and a resin film containing ceramic microparticles (C) at 2 mass% was produced. As the ceramic microparticles (C), silica particles having a secondary particle size of 3 µm or larger and a particle size range of 3 to 10 µm were used. The ceramic microparticles (C) were prepared by pretreating the same ceramic nanoparticles as in Example 1 and agglomerating the resulting primary particles to form secondary particles, sieving the secondary particles to remove silica particles of 3 µm or smaller, and preparing silica particles having a secondary particle size of 3 µm or larger and a particle size range of 3 to 10 µm.

### [Evaluation Method]

### (Average particle size, Particle size range)

200 or more particles of the obtained silica powder were observed with a scanning electron microscope (SEM), the particle size range was determined from the equivalent circle diameters obtained through image analysis of the particles, and the 50% diameter (D50v) in the cumulative frequency of the equivalent circle diameters obtained through the image analysis of the particles was calculated. Commercial products were also measured in the same manner, regardless of specifications.

### (Light transmittance, Diffused light, Haze)

Measurement was performed by the method in accordance with JIS K7136. A haze meter "NDH4000" (manufactured by Nippon Denshoku Industries Co., Ltd.) was used as a measuring instrument.

### (Fresh weight)

Vegetable seedlings (five seedlings) planted in polypots were covered with the sheets of Examples and Comparative Examples and allowed to grow under indoor lighting for 28 days. The average weight of the five vegetables just after harvest was measured and compared. The results are given in Table 1.

**[Table 1]**

| | Resin film | | | | | | | | | Evaluation | |
|---|---|---|---|---|---|---|---|---|---|---|---|
| | Composition | | | | | Thickness | Characteristics | | | Evaluation sample | Average fresh weight (%) |
| | Resin (mass%) | Microparticle | | Nanoparticle | | (µm) | Transmittance (%) | Diffused light (%) | Haze (%) | | |
| | | Particle size range (µm) | Content (mass%) | Particle size range (nm) | Content (mass%) | | | | | | |
| Comparative Example 1 | 100 | - | - | - | - | 150 | 88.41 | 12.17 | 13.37 | - | - |
| Example 1 | 90 | - | - | 40-80 | 10 | 150 | 90.03 | 13.45 | 14.94 | Lettuce | +13 |
| Example 2 | 90 | - | - | 40-80 (Hollow) | 10 | 150 | 91.44 | 13.77 | 15.06 | Lettuce | +21 |
| Comparative Example 2 | 100 | - | - | - | - | 100 | 89.92 | 12.25 | 13.62 | - | - |
| Example 3 | 98 | 3-5 | 2 | - | - | 100 | 90.05 | 38.01 | 42.21 | Lettuce | +5 |
| Example 4 | 95 | 3-5 | 1 | 40-80 | 4 | 100 | 90.71 | 24.95 | 27.21 | Arugula | +14 |
| Example 5 | 98 | 3-10 (Agglomerated) | 2 | - | - | 100 | 90.12 | 29.92 | 33.20 | Spinach | +8 |

As indicated in Table 1, in comparison with the resin film in Comparative Example 1, the average fresh weight of vegetables increased by 13% for the resin film in Example 1, 21% for the resin film in Example 2, 5% for the resin film in Example 3, 14% for the resin film in Example 4, and 8% for the resin film in Example 5. These increases were thought to be caused by the increases in light transmittance of the resin films.

Among them, the resin films of Examples 1, 2, and 4 using ceramic nanoparticles exhibited good results, with large increases in the average fresh weight of vegetables. In particular, the resin film of Example 2 using hollow ceramic nanoparticles exhibited a significantly good result, with a noticeable increase in the average fresh weight of vegetables.

### [Comparative Example 3]

For the resin film in Comparative Example 3, low-density polyethylene was used as the resin, and a resin film containing ceramic particles at 10 mass% was produced. As the ceramic particles, silica particles having an average particle size of 1 µm and a particle size range of 500 nm to 2 µm were used. The same low-density polyethylene as in Comparative Example 1 was used, and "SiO₂ silicon dioxide" (trade name, average particle size: 1 µm, particle size range: 500 nm to 2 µm, manufactured by Kojundo Chemical Laboratory Co., Ltd.) was used as the silica particles.

As for the evaluation method, the same method as in Example 1 was used. The results of comparing the above-described resin films of Comparative Example 1 and Example 1 with the resin film of Comparative Example 3 are given in Table 2.

**[Table 2]**

| | Resin film | | | | | | | | | Evaluation | |
|---|---|---|---|---|---|---|---|---|---|---|---|
| | Composition | | | | | Thickness | Characteristics | | | Evaluation sample | Average fresh weight (%) |
| | Resin (mass%) | Fine particle | | Nanoparticle | | (µm) | Transmittance (%) | Diffused light (%) | Haze (%) | | |
| | | Particle size range (µm) | Content (mass%) | Particle size range (nm) | Content (mass%) | | | | | | |
| Comparative Example 1 | 100 | - | - | - | - | 150 | 88.41 | 12.17 | 13.37 | | - |
| Example 1 | 90 | - | - | 40-80 | 10 | 150 | 90.03 | 13.45 | 14.94 | Lettuce | +13 |
| Comparative Example 3 | 90 | 0.5-2 | 10 | - | - | 150 | 78.83 | 72.29 | 91.7 | Lettuce | -48 |

As indicated in Table 2, in comparison with the resin film of Example 1, the light transmittance of the resin film of Comparative Example 3 decreased significantly. Haze also increased significantly, and thus the cause of the decrease in light transmittance was thought to be increased backscattering by the ceramic particles and decreased transparency of the resin film.

With the resin film in Comparative Example 3, the average fresh weight of vegetables decreased by 48%. This decrease was thought to be caused by the decrease in light transmittance of the resin film. This indicates that simply containing ceramic fine particles does not increase the light transmittance of the resin film, and that precise control of their particle size is necessary. Specifically, it was found important to remove ceramic fine particles having a particle size larger than 100 nm and smaller than 3 µm as much as possible.

### [Examples 6 to 10]

In the same manner as in Examples 1 to 5, resin films having a thickness of 150 µm or a thickness of 100 µm were produced, and the physical properties of the resin films and the growths of plants covered with the resin films were compared.

### (Example 6)

The same low-density polyethylene as in Example 1 was used as the resin, and a resin film containing ceramic nanoparticles (B) at 10 mass% was produced. As the ceramic nanoparticles (B), silica particles (trade name "HSP-2S", manufactured by Fuso Chemical Co., Ltd.) having an average particle size of 25 nm and a particle size range of 20 to 40 nm were used.

### (Example 7)

The same low-density polyethylene as in Example 1 was used as the resin, and a resin film containing ceramic microparticles (C) at 10 mass% was produced. The same ceramic microparticles (C) as in Example 3 were used.

### (Example 8)

The same low-density polyethylene as in Example 1 was used as the resin, and a resin film containing ceramic nanoparticles (B) at 5 mass% was produced. The same ceramic nanoparticles (B) as in Example 1 were used.

### (Example 9)

The same low-density polyethylene as in Example 1 was used as the resin, and a resin film containing ceramic nanoparticles (B) at 0.4 mass% and ceramic micro particles (C) at 0.1 mass% (ceramic fine particles at 0.5 mass% in total) was produced. The same ceramic nanoparticles (B) as in Example 1 (average particle size: 60 nm, particle size range: 40 to 80 nm) were used, and the same ceramic microparticles (C) as in Example 3 (average particle size: 4 µm, particle size range: 3 to 5 µm) were used.

### (Example 10)

The same low-density polyethylene as in Example 1 was used as the resin, and a resin film containing ceramic nanoparticles (B) at 10 mass% and ceramic micro particles (C) at 5 mass% (ceramic fine particles at 15 mass% in total) was produced. The same ceramic nanoparticles (B) as in Example 1 (average particle size: 60 nm, particle size range: 40 to 80 nm) were used, and the same ceramic microparticles (C) as in Example 3 (average particle size: 4 µm, particle size range: 3 to 5 µm) were used.

Light transmittance, diffused light, haze, and fresh weight in Examples 6 to 10 were measured in the same manner as described above, and compared. The results are given in Table 3.

**[Table 3]**

| | Resin film | | | | | | | | | Evaluation | |
|---|---|---|---|---|---|---|---|---|---|---|---|
| | Composition | | | | | Thickness | Characteristics | | | Evaluation sample | Average fresh weight (%) |
| | Resin (mass%) | Microparticle | | Nanoparticle | | (µm) | Transmittance (%) | Diffused light (%) | Haze (%) | | |
| | | Particle size range (µm) | Content (mass%) | Particle size range (nm) | Content (mass%) | | | | | | |
| Example 6 | 90 | - | - | 20-40 | 10 | 150 | 89.95 | 13.54 | 15.05 | Lettuce | +12 |
| Example 7 | 90 | 3-5 | 10 | - | - | 150 | 87.89 | 44.23 | 50.32 | Lettuce | +3 |
| Example 8 | 95 | - | - | 40-80 | 5 | 150 | 90.86 | 13.66 | 15.03 | Lettuce | +21 |
| Example 9 | 99.5 | 3-5 | 0.1 | 40-80 | 0.4 | 150 | 88.52 | 12.26 | 13.85 | Arugula | +2 |
| Example 10 | 85 | 3-5 | 5 | 40-80 | 10 | 100 | 88.89 | 39.23 | 44.13 | Arugula | +10 |

### INDUSTRIAL APPLICABILITY

In comparison with conventional resin films, the resin film of the present invention has a higher light transmittance and/or utilization rate of light used for plants and can promote the growth of crops, and thus can be used suitably as an agricultural covering material. Specifically, it can be used for resin films for vinyl greenhouses, resin films for tunnels, and agricultural mulch films, for example.

## Claims

1. A resin film containing ceramic fine particles (A), wherein:
the resin film contains ceramic nanoparticles (B) and/or ceramic microparticles (C) as the ceramic fine particles (A); the ceramic nanoparticles (B) have a particle size of 1 nm to 100 nm and the ceramic microparticles (C) have a particle size of 3 µm to 20 µm, and
the total content of the ceramic nanoparticles (B) and the ceramic microparticles (C) is between 95 mass% and 100 mass% in the total mass of the ceramic fine particles (A).

2. The resin film according to claim 1, wherein the ceramic nanoparticles (B) and the ceramic microparticles (C) are silica fine particles.

3. The resin film according to claim 1 or 2, wherein the resin film contains hollow particles as the ceramic fine particles (A).

4. The resin film according to claim 1 or 2, wherein the content of the ceramic fine particles (A) is between 0.1 mass% and 50 mass%.

5. An agricultural covering material using the resin film according to claim 1 or 2.

6. An agricultural covering material using the resin film according to claim 3.

7. An agricultural covering material using the resin film according to claim 4.
